# NEW EUROPEAN PATENT SPECIFICATION

(11) **EP 0 498 434 B2**
(45) Date of publication and mention of the opposition decision: **16.12.1998**
(45) Mention of the grant of the patent: 07.02.1996
(21) Application number: 92102013.7
(22) Date of filing: 06.02.1992
(51) Int. Cl.: G01M 3/20

(54) **Gas leakage testing method**
Verfahren zur Prüfung von Gasleckage
Méthode pour tester des fuites de gaz

(30) Priority: 08.02.1991 JP 39350/91
(43) Date of publication of application: 12.08.1992
(73) Proprietor: YAMAHA CORPORATION, Hamamatsu-shi Shizuoka-ken (JP)
(72) Inventor: Toda, Hiromitsu, c/o YAMAHA CORPORATION, Hamamatsu-shi, Shizuoka-ken (JP)
(74) Representative: Wagner, Karl H., Dipl.-Ing.

(56) References cited:
- WO-A-88/04774
- DE-A- 2 403 360
- DE-A- 2 441 123
- DE-A- 2 728 838
- US-A- 3 577 769
- PATENT ABSTRACTS OF JAPAN vol. 9, no. 37 (P-335)(1760) 16 February 1985 & JP-A-59 180 340.
- THE SOVIET J. OF NONDESTRUCTIVE TESTING vol. 14, no. 6, June 1978, pages 511 - 514; S.G. SAZHIN ET AL.: 'automation of airtightness inspection with the aid of a halogen leak detector'
- LE VIDE, LES COUCHES MINCES vol. 201, May 1980, PARIS pages 101 - 119; B. BLANC ET AL.: 'techniques de controle de l'étanchéité'
- THE SOVIET JOURNAL OF NONDESTRUCTIVE TESTING vol. 16, no. 11, November 1980, NEW YORK, USA pages 823 - 826; S.G. SAZHIN ET AL.: 'automated inspection of the tightness of bellows units'

## Description

The present invention relates to a gas leakage testing method which detects gas micro-leakage from a testing specimen in a gas leakage test.

### Prior Art

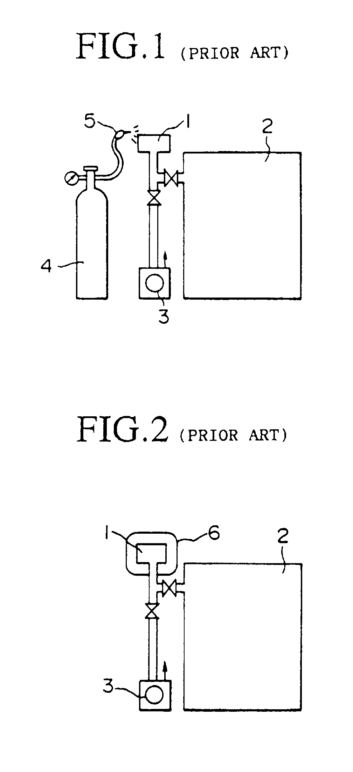

Conventionally, there are provided several kinds of gas leakage testing methods and devices as shown in Figs. 1 to 5.

Fig. 1 shows one of the conventional gas leakage testing devices which is designed according to the so-called vacuum method (i.e., testing method in which probe gas is blown toward the testing specimen). Herein, a leakage detector 2 is connected to a testing specimen 1 such that gas can be flown between them. In addition, a suction pump 3 is connected to the testing specimen 1 so that the inner wall of the testing specimen 1 is subjected to evacuation. Further, there is provided a helium gas bomb which blows out helium gas (i.e., He gas) toward the outer wall of the testing specimen from its He-gas blowing pipe 5.

After subjecting the testing specimen to evacuation by use of the vacuum pump 3, this device interconnects the leakage detector 2 to the inside of the testing specimen, so that He gas is blown toward the testing specimen 1 via the blowing pipe 5. If there is existed a leakage point in the wall of the testing specimen 1, He gas must be entered into the testing specimen 1 from such point, which is detected by the leakage detector 2.

Fig. 2 shows another device according to another vacuum method (i.e., hood-type testing method which also blows the probe gas toward the testing specimen). Herein, as similar to the foregoing device shown in Fig. 1, the testing specimen 1 can be selectively connected to one of the leakage detector 2 and suction pump 3. Further, this testing specimen 1 is covered by a container such as a hood 6.

In this device, the vacuum pump 3 subjects the testing specimen 1 to evacuation, and then helium gas is filled in the hood 6. In this state, if a leakage point is existed in the testing specimen 1, He gas is entered into the leakage detector 2 via this point, so that the leakage detector 2 will detect He-gas leakage. According to this device, it is possible to detect the gas leakage in the whole portion of the testing specimen 1, by which gas leakage quantity can be measured as a whole.

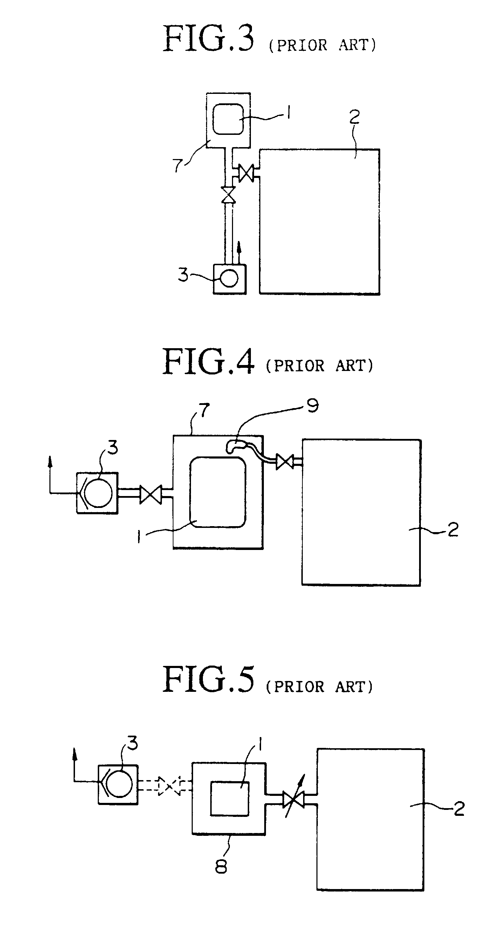

Fig. 3 shows a gas leakage testing device according to the vacuum internal-pressure method. Herein, the testing specimen 1 which is filled with He gas in advance is inserted into a chamber 7, and then the vacuum pump 3 subjects this chamber 7 to evacuation. In this state, if a leakage point is existed in the testing specimen 1, He gas must be leaked from this point, which is detected by the leakage detector 2.

Fig. 4 shows a gas leakage testing device according to the sniffer method. Herein, the testing specimen 1 which is filled with pressurized He gas is inserted into the chamber 7, and then the vacuum pump 3 subjects the chamber 7 to evacuation. In addition, a sniffer probe 4 sniffs around the testing specimen 1, and consequently He gas leaked from the leakage point of the testing specimen 1 is detected by the leakage detector 2.

Fig. 5 shows a gas leakage testing device according to the integration method. Herein, the testing specimen 1 which is filled with pressurized He gas is inserted into a hood 8 of which capacity is known. After the vacuum pump 3 subjects the hood 8 to evacuation, the testing specimen 1 is left as it is for a long time. In such period of time, this device measures variation of helium density in He gas to be leaked from the testing specimen 1. By integrating such variation of helium density, it is possible to detect micro-leakage quantity.

Regardless of the above-mentioned features, each of the conventional gas leakage testing devices suffers from the following drawbacks.

In the devices as shown in Figs. 1, 2, after subjecting the testing specimen 1 to evacuation, He gas is filled around the testing specimen 1, so that gas leakage is detected by detecting He gas to be entered into the specimen 1. On the other hand, in the devices as shown in Figs. 3 to 5, after filling the testing specimen 1 with pressurized He gas, gas leakage is detected by detecting He gas to be leaked to the outside of the specimen 1. As described above, the conventional devices subject the inside or outside (i.e., inside of the chamber) of the testing specimen 1 to vacuum evacuation. However, due to the existence of natural He gas (at 5 ppm) in the air, it is hard for the leakage detector to correctly detect the gas micro-leakage.

In order to detect such gas micro-leakage with accuracy, evacuation must be made to the highly vacuumed state, which makes the testing time longer. In addition, surch nighly vacuumed state may require more than two kinds of pumps to be coupled together, which makes the evacuation system more complicated.

When examining large number of testing specimens, vacuum evacuation must be made in relatively short period of time. For this reason, it is necessary to provide a large-scale vacuum evacuation device, however, which raises the whole system cost higher.

Even if such large-scale vacuum evacuation device is used, volatile matter or water content may be produced from the testing specimen or wall of testing container, and gas or air may be ejected from micro-holes of the testing specimen. Thus, it is hard to raise degree of vacuum in a short period of time. In addition, He gas existed in the air may work as the background noise for the detector. These factors make the detecting precision of leaked He gas lower.

With respect to the prior art attention is drawn to WO-88-04774 disclosing an apparatus and process designed for detecting both large and small leaks in test objects. The small leak component leak detector comprises a container means such as a glove box maintained at about one atmosphere pressure for a receiving test objects, a moveable probe situated with the glove box for sniffing and capturing the samples of detecting gas in proximity to the test object, an entrainment pump which consists of a getter pump or a modified cryopump located between the sampling probe and the mass detector for measuring the detecting gas and a mass detector. The entrainment pump is capable of entrapping a purge carrier gas, such as nitrogen, but not entrapping a detecting gas, such as helium.

The invention relates to a gas leakage testing method as referred to in claim 1.

Preferred embodiments are disclosed in the dependent claim.

### SUMMARY OF THE INVENTION

It is accordingly a primary object of the present invention to provide a gas leakage testing method which is not affected by the background noise caused by the probe gas under low degree of vacuum so that gas micro-leakage can be detected with ease and at high speed.

It is another object of the present invention to provide a gas leakage testing method which can carry out a gas leakage test on a large number of testing specimens without complicating its system configuration.

It is a further object of the present invention to provide a method of testing gas leakage with accuracy and at high speed.

In the present invention, there is provided a method of testing gas leakage comprising steps of: storing a testing specimen in a testing container; replacing the air in the testing container with substitute gas; detecting density of probe gas existed in the testing container so as to obtain a background value; introducing probe gas into the testing specimen; detecting density of the probe gas in the testing container so as to determine whether or not the probe gas is leaked from the testing specimen on the basis of the background value.

In the above-mentioned configuration, after storing the testing specimen within the testing container, the substitute gas supplying means supplies substitute gas into the testing container, so that the inside air or gas is replaced by substitute gas. Then, the evacuation means removes air or gas from the testing container, so that density of probe gas is lowered in the testing container. Thereafter, the probe gas detecting means detects the density of probe gas in the testing container, thereby computing a background value. After that, the probe gas introducing means introduces probe gas into the inside of the testing specimen. In this state, if there is existed a leakage point in the testing specimen, probe gas is leaked to the outside space of the testing specimen in the testing container, which is detected by the probe gas detecting means. Thus, if the density value of probe gas to be detected by the detecting means becomes higher than the background value, it is proved that one or more leakage points must be existed in the testing specimen.

Incidentally, as the method of gas substitution of the testing container made by the substitute gas supplying means, there are provided three methods. More specifically, in first method, gas substitution is made under atmospheric pressure; in second method, it is made after completely removing the air or gas from the testing container; and in third method, it is made after removing the air or gas from the testing container to certain degree. Further, the present invention can employ another method wherein the air in the testing container is diluted with the substitute gas. Herein, in order to lower the background value and also improve the gas leakage detecting precision, it is preferable for the present invention to employ the method in which the substitute gas is introduced into the testing container after removing the air or gas from the testing container.

As described before, introduction of the probe gas into the testing specimen is made under the state where the air is existed in the testing specimen. Or, it is possible to introduce probe gas into the testing specimen after subjecting the inside of the testing specimen to evacuation by the evacuation means. In order to improve the gas leakage detecting precision, it is preferable to introduce probe gas after subjecting the inside of the testing specimen to evacuation.

As the probe gas, it is possible to employ fleon gas, hydrogen gas, helium gas etc. As the substitute gas, it is possible to employ nitrogen gas, oxygen gas, steam, fleon gas etc. In this case, however, the substitute gas must not contain the component of the probe gas. In other words, the substitute gas must not contain the component of the probe gas of which volume is more than that of the air at least. More specifically, the volume of the probe gas is less than one-tenth volume of the air. Therefore, when using the fleon gas as the probe gas, fleon gas cannot be used as the substitute gas.

As for the gas to be introduced into the testing container and testing specimen, it is possible to reversely use one of the probe gas and substitute gas. In other words, the probe gas can be introduced into the testing container, while the substitute gas can be introduced into the testing specimen. In addition, several modifications can be made in the usage of the gas to be introduced. In this case, for example, the probe gas detecting means may be interconnected with the testing specimen.

### BRIEF DESCRIPTION OF THE DRAWINGS

Further objects and advantages of the present invention will be apparent from the following description, reference being had to the accompanying drawings wherein the preferred embodiments of the present invention are clearly shown.

In the drawings:
Figs. 1 to 5 are schematic drawings each illustrating a system configuration of the conventional gas leakage testing device;

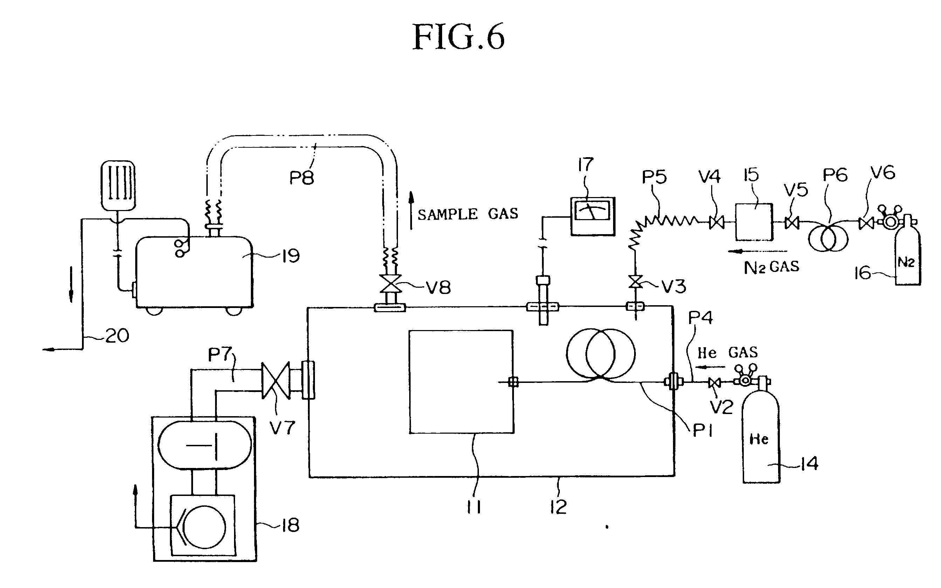

Fig. 6 is a schematic drawing illustrating a system configuration of a first gas leakage testing device which functions according to the method of the present invention;

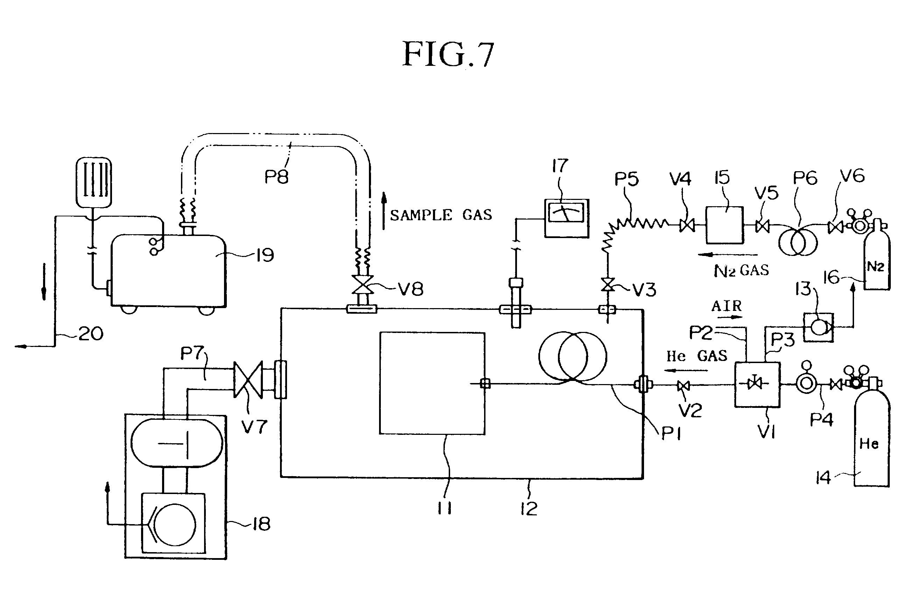

Fig. 7 is a schematic drawing illustrating a system configuration of a second gas leakage testing device which functions according to the method of the present invention;

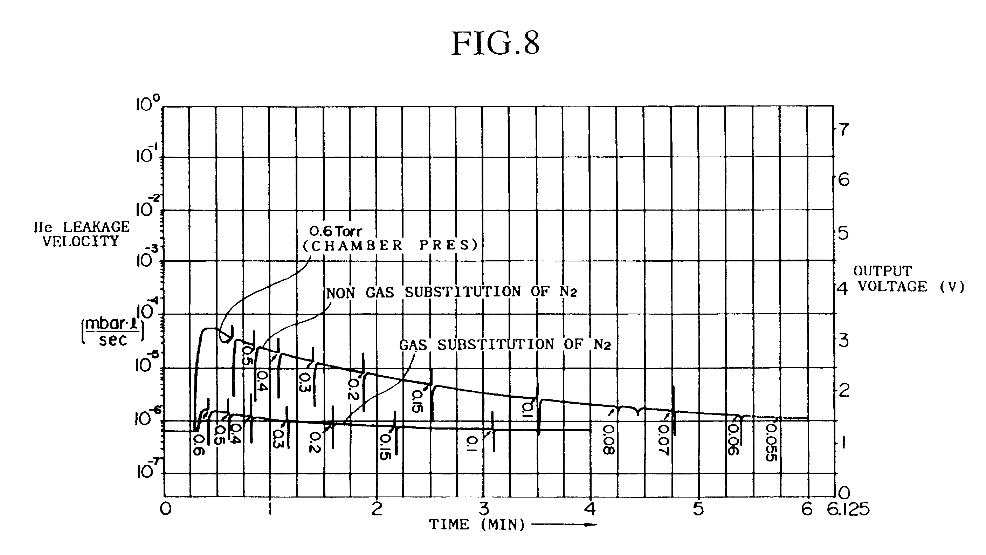

Fig. 8 is a graph showing a variation of gas leakage velocity of He gas with respect to the gas substitution using N₂ gas; and

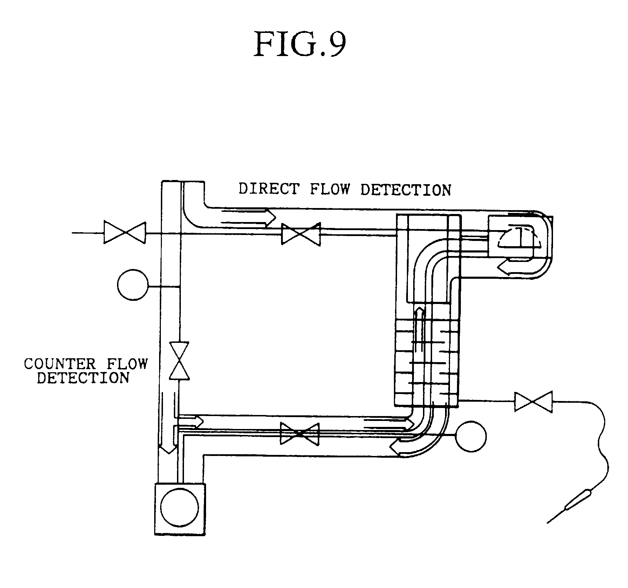

Fig. 9 is a schematic drawing illustrating a construction of a He gas leakage detector using a turbo molecular pump.

### DESCRIPTION OF THE PREFERRED EMBODIMENTS

Fig. 6 is a schematic drawing illustrating the first gas leakage testing device which functions according to the method of the present invention. In Fig. 6, a vacuum container 12 has a size in which a testing specimen 11 can be stored therein in air tight manner. Herein, inside of this testing specimen 11 is interconnected with a copper pipe P1 having a diameter of 1/4 inch (6.4 mm), for example. This copper pipe P1 extends to the outside of the vacuum container 12 in air tight manner, and it is further connected to a bomb 14, storing helium gas which is used as the probe gas, via another pipe P4. In addition, an open/close valve V2 is provided at the middle of the pipe P4.

Another pipe P5 connects the vacuum container 12 with a reserve tank 15 which will store nitrogen gas (i.e., N₂ gas) used as the substitute gas. This reserve tank 15 is further connected to a N₂ gas bomb 16 via a pipe P6. Herein, a vent valve V3 and an open/close valve V4 are provided on the pipe P5, while open/close valves V5, V6 are provided on the pipe P6.

Meanwhile, the vacuum container 12 is connected with a vacuum evacuation unit 18 via a pipe P7. In addition, this vacuum container 12 is also connected with a leakage detector 19 via a pipe P8. This leakage detector 19 is designed to detect the probe gas and then convert it into an electric signal, i.e., detection signal, which is outputted to a leakage judging unit (not shown) via wires 20.

Next, description will be given with respect to the above-mentioned gas leakage testing device. First, the testing specimen 11 is inserted into the vacuum container 12, and the pipe P1 is interconnected with the testing specimen 11. After that, the vacuum evacuation unit 18 is driven so as to open the valve V7 and remove the air from the container 12. After the internal pressure of the vacuum container 12 is reduced to certain pressure approximately ranging from 10 Torr (i.e., 1.33x10³ Pa) to 1 Torr (i.e., 1.33x10² Pa), the valve V3 is opened so that N₂ gas is supplied to the vacuum container 12 from the bomb 16 via the reserve tank 15. In order to fill the reserve tank 15 with N₂ gas normally, the valves V5, V6 are normally opened. Herein, the valve V4 is provided to adjust the gas flow, therefore, it is normally opened at certain valve-opening degree which is larger than the minimum valve-opening degree. Incidentally, gas flow control for N₂ gas can be made either one of the valves V3, V4. After N₂ gas is introduced so that the internal pressure of the vacuum container 12 reaches at 50 Torr (i.e., 6.65x10³ Pa) approximately, the valve V3 is closed. The open/close timings of the valves depend on the internal pressure of the vacuum container 12 which corresponds to the detection precision of He gas.

By closing the valve V3, the air in the vacuum container 12 is intermittently evacuated by the vacuum evacuation unit 18, and consequently the internal pressure of the vacuum container 12 is to be reduced. When this internal pressure of the vacuum container 12 is reduced to the predetermined pressure (e.g., 0.75 Torr, i.e., approximately 100 Pa) at which the He leakage detector 19 can operate, the valve V8 is opened. Next, the valve V7 is closed, so that the leakage detector 19 will detect the density of He gas in the vacuum container 12. Herein, the detected density of He gas is converted into the background value, of which data is sent to the leakage judging unit. When measuring the background value, it is possible not to close the valve V7 and continue the evacuation of the vacuum container 12.

Next, the valve V2 is opened so as to introduce He gas into the testing specimen 11. In this case, if a leakage point is existed in the wall of the testing specimen 11, He gas must be ejected from the testing specimen 11 via such leakage point, and consequently it must be leaked to the space of the vacuum container 12. Then, the leakage detector 19 detects the density of He gas within the vacuum container 12. The detection signal is supplied to the leakage judging unit via wires 20, wherein the value thereof is compared to the foregoing background value. If the detection value which is obtained after He gas is introduced into the vacuum container 12 is higher than the background value, it is judged that the gas leakage is occurred in the testing specimen 11.

After the gas substitution (or gas dilution) is carried out in the vacuum container 12 by use of N₂ gas and the vacuum container 12 is subjected to evacuation, He gas is introduced into the testing specimen as the probe gas. Therefore, as comparing to the conventional devices, the present embodiment can reduce the background value of He gas. In such background-value-reduced state, the present embodiment detects He gas leaked from the testing specimen. Therefore, even if the gas leakage quantity is extremely small, the present embodiment can certainly detect the gas leakage. In addition, even when the highly vacuumed state cannot be obtained so that the vacuum evacuation can be made to relatively low degree of vacuum, it is possible to detect He gas leaked from the testing specimen. Therefore, capacity of the vacuum pump or vacuum evacuation unit 18 can be reduced. Thus, the present embodiment can carry out a gas leakage test in a short period of time, by use of the simple evacuation unit.

Fig. 7 is a schematic drawing illustrating a second gas leakage testing device which functions according to the method of the present invention, wherein parts identical to those shown in Fig. 6 will be designated by the same numerals, hence, description thereof will be omitted. Herein, a main difference between the first and second devices lies in the provision of a valve network V1 to be provided between the pipes P1, P4. This valve network V1 is connected with pipes P2, P3, wherein pipe P2 is provided to introduce the air, while pipe P3 is further connected with a pump 13.

In the above-mentioned second device, the testing specimen 11 is inserted into the vacuum container 12, and then the testing specimen 11 is interconnected with the pipe P1. After that, the valve network V1 is changed over to drive the pump 13, while the valve V2 is opened to remove the air from the testing specimen 11. Next, the vacuum evacuation unit 18 is driven, and the valve V7 is opened, so that the vacuum container 12 is subjected to evacuation. Thereafter, as similar to the foregoing first embodiment, the inside gas of the vacuum container 12 is replaced with the substitute gas and the vacuum container 12 is again subjected to evacuation to thereby reduce the density of the probe gas existed in the vacuum container 12, and then the second embodiment measures the background value.

Next, the valve network V1 is changed over such that the pipe P1 is connected to the pipe P2, and the valve V2 is opened so as to introduce He gas into the testing specimen 11. Thereafter, the leakage detector 19 detects the density of He gas in the vacuum container 12, and the detection result is compared to the background value. If the detection value which is obtained after introducing He gas is higher than the background value, it is judged that any leakage points must be existed in the testing specimen 11.

The second device is designed such that after subjecting the testing specimen 11 to evacuation, the probe gas (i.e., He gas) is introduced into the testing specimen 11. Therefore, this embodiment can further improve the leakage detection precision.

Next, description will be given with respect to the effects of the present invention in the actual gas leakage test. Fig. 8 is a graph showing a density variation of He gas in an evacuation process, wherein horizontal axis represents time, while vertical axis represents gas leakage velocity of He gas (which corresponds to the detection voltage of the leakage detector). Fig. 8 includes two kinds of curves each representing a variation of leakage velocity, wherein first curve corresponds to the state where the evacuation is made after carrying out the gas substitution using N₂ gas, while second curve corresponds to the state where the evacuation is made without carrying out the gas substitution using N₂ gas. In each curve, the density of He gas becomes lower in a lapse of time. However, in the second curve wherein the gas substitution using N₂ gas is not carried out, the density of He gas is relatively high and the background value is also relatively high. On the other hand, in the first curve wherein the evacuation is made after carrying out the gas substitution using N₂ gas, the detected density of He gas must be lower, and the background value becomes remarkably low.

As described before, the present device is designed such that after replacing the air in the vacuum container 12 with N₂ gas, the gas leakage of He gas is detected in a state where the vacuum container 12 is evacuated to relatively low degree of vacuum. Therefore, the leakage detector 19 must have a function in which He gas can be detected under a state of low degree of vacuum. As such device which can detect He gas under low degree of vacuum, it is possible to employ one of the conventional devices as illustrated in Figs. 3 to 5. Even in these devices, a leakage valve or a capillary must be provided to increase a gas-flow-resistance and therefore provide a gas-pressure difference. As a method in which He gas can be detected in high-responsive and high-sensitive manner without using the above-mentioned leakage valve or capillary, modem technology can offer a system as illustrated in Fig. 9. Fig. 9 illustrates a leakage detector which can detect He gas under low degree of vacuum by using the counter flow of the turbo molecular pump.

As described above, the above-mentioned techniques can detect He gas under low degree of vacuum. However, due to the existence of He gas at 5 ppm in the atmospheric air, the background value of He gas must be high, so that gas micro-leakage cannot be detected with accuracy. In order to detect such gas micro-leakage, as described before, the vacuum container must be evacuated to high degree of vacuum so that the background value of He gas will be reduced For this reason, the above-mentioned techniques may not be available.

In contrast, the present embodiment is designed such that after replacing the air in the vacuum container 12 with N₂ gas, the vacuum container 12 is subjected to evacuation so as to reduce the density of the probe gas existed in the vacuum container 12, and then the gas leakage detection is made by use of He gas as the probe gas. Therefore, the present embodiment can detect the gas leakage under a state where the background value is relatively low. In other words, the present embodiment can effectively use the superior characteristic of the foregoing turbo-molecular-pump-type leakage detector in the detection of the gas micro-leakage.

When testing the mass-production goods, the inspection time must be shortened, which reversely indicates that there is a need in which He gas is measured in relatively low degree of vacuum. On the other hand, according to the gasleakage inspection standard (e.g., fleon gas regulation in these days), there is a demand in which the gas leakage test is made under high degree of vacuum. In the conventional techniques, it must be necessary to judge the gas micro-leakage under a state where the background value of He gas is reduced by high degree of vacuum so as to enlarge S/N ratio.

Meanwhile, the testing specimen 11, in general, will produce much quantity of the volatile matters such as the oil, water content and organic solvent. In many cases, the finished products have been already painted, or they are subjected to resin treatment, or they contain water content like sponges, dust and the like, for example. Thus, in order to achieve the middle or high degree of vacuum, it is necessary to use a high-capacity vacuum pump of which vacuum evacuation characteristic is improved in a range between the middle and high degrees of vacuum. However, the vacuum pump to be used in such range has a construction weakness against the oil, dust, fibers, small sands and the like to be entered therein. These matters will deteriorate the durability of the pump. The same thing can be said to the leakage detector for He gas. Even in the oil diffusion pump or direct-flow-type turbo pump, the analyzer tube and the like must be in trouble in a short period of time by the pollutant and the like, which is troublesome.

In contrast, the counter-flow-type (i.e., back-diffusion-type) turbo pump has a special construction in which the gas other than He gas and H₂ gas cannot be entered into the section other than the highly-vacuumed or superhigh-vacuumed sections containing the analyzer tube (i.e., spectrometer). In short, the pollutant or foreign matters are ejected by the main pump (normally, rotary pump) provided at the discharge side (i.e., follow-line side) of the turbo pump. This remarkably reduce a possibility in that the turbo pump and analyzer tube are in the trouble or malfunction due to the entering of the pollutant and foreign matters.

The present embodiment is designed on the basis of the combination of the back-diffusion-type He gas leakage detector and gas substitution/evacuation means. Herein, the leakage detector employs the turbo pump, molecular pump and the like. In the gas substitution/evacuation means, the atmospheric air containing He gas is partially or all substituted by the gas, such as N₂ gas or O₂ gas, which does not contain He gas, or organic solvent, steam of water content and the like, and then evacuation is carried out, thereafter, the partial pressure of He gas is to be reduced. Thus, the present embodiment is available when detecting the gas micro-leakage at high speed and with simple system.

## Claims

1. A method of testing gas leakage comprising the steps of:
storing a testing specimen (11) in an air filled testing container (12);
evacuating the testing container (12) of air to a predetermined low pressure, and then, purging said testing container (12) with a substitute gas which does not contain a probe gas;
thereafter, detecting density of the probe gas in said testing container (12) so as to obtain a background value representing a background noise for a detection of gas leakage;
introducing the probe gas into said testing specimen (11); and
detecting density of the probe gas in said testing container (12) so as to determine whether or not the probe gas has leaked from said testing specimen (11) on the basis of said background value.

2. A method of testing gas leakage as defined in claim 1, wherein said substitute gas is nitrogen gas and/or said probe gas is helium gas.

## Patentansprüche

1. Verfahren zum Testen von Gasleckage, das folgende Schritte aufweist:
Speichen einer Testprobe (11) in einem luftgefüllten Testbehälter (12);
Evakuieren von Luft aus dem Testbehälter (12) auf einen vorbestimmten niedrigen Druck, und dann Spülen des Testbehälters (12) mit einem Ersatzgas, welches nicht ein Versuchsgas enthält;
Danach Detektieren der Dichte des Sonden- bzw. Versuchsgases in dem Testbehälter (12) um einen Hintergrundwert zu erhalten, der ein Hintergrundrauschen für eine Gasleckagedetektion darstellt;
Einführen bzw. Einleiten des Versuchs- bzw. Probegases in die Testprobe (11); und
Detektieren der Dichte des Versuchsgases im Testbehälter (12) um zu bestimmen, ob oder ob nicht das Versuchs- bzw. Probegas aus der Testprobe (11) geleckt hat, und zwar auf Grund des Hintergrundwertes.

2. Verfahren zum Testen von Gasleckage nach Anspruch 1, wobei das Ersatzgas Stickstoff-Gas ist, und/oder das Versuchsgas Helium-Gas ist.

## Revendications

1. Procédé de détection de fuites de gaz comprenant les étapes suivantes :
stocker un échantillon à tester (11) dans un réservoir de détection (12) rempli d'air ;
évacuer l'air du réservoir de détection (12) jusqu'à une basse pression prédéterminée et, ensuite, purger le réservoir de détection (12) avec un gaz de substitution qui ne contient pas de gaz de test ;
ensuite, détecter la densité du gaz de test dans le réservoir de détection (12) afin d'obtenir une valeur de fond représentant un bruit de fond pour une détection de fuite de gaz ;
introduire le gaz de test dans l'échantillon à tester (11) ; et
détecter la densité du gaz de test dans le réservoir de détection (12) afin de déterminer si le gaz de test s'est échappé ou non de l'échantillon à tester (11) sur la base de la valeur de fond.

2. Procédé de détection de fuites de gaz selon la revendication 1, dans lequel le gaz de substitution est de l'azote et/ou le gaz de test est de l'hélium.
